(19) Europäisches Patentamt
European Patent Office
Office européen des brevets

(11) **EP 4 579 225 A1**

(12) **EUROPEAN PATENT APPLICATION**
published in accordance with Art. 153(4) EPC

(43) Date of publication:
**02.07.2025 Bulletin 2025/27**

(21) Application number: **23871346.5**

(22) Date of filing: **28.06.2023**

(51) International Patent Classification (IPC):
***G01N 21/892*** (2006.01)

(52) Cooperative Patent Classification (CPC):
**G01N 21/892**

(86) International application number:
**PCT/JP2023/024078**

(87) International publication number:
**WO 2024/070101 (04.04.2024 Gazette 2024/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.09.2022 JP 2022154254**

(71) Applicant: **JFE Steel Corporation
Tokyo 100-0011 (JP)**

(72) Inventors:
• **UMEGAKI, Yoshiyuki
Tokyo 100-0011 (JP)**
• **ONO, Hiroaki
Tokyo 100-0011 (JP)**

(74) Representative: **Haseltine Lake Kempner LLP
Bürkleinstrasse 10
80538 München (DE)**

(54) **SURFACE DEFECT DETECTING METHOD AND SURFACE DEFECT DETECTING DEVICE**

(57)    A surface defect detection method for optically detecting a surface defect in a strip-shaped body includes an image acquisition step of detecting reflected light from the strip-shaped body obtained by illuminating a surface of the strip-shaped body and imaging while relatively scanning the surface of the strip-shaped body to acquire a plurality of images including the surface of the strip-shaped body, an average image calculation step of calculating an average image of the acquired images, an image correction step of performing shading correction on each acquired image using the average image to obtain corrected images, and a defect detection step of detecting a surface defect in the strip-shaped body based on the corrected images. The average image calculation step includes recognizing an inspection target region in which the strip-shaped body is located in each image and contributing to the average image only for pixels in the inspection target region.

*FIG. 2*

```
                    Start

           Acquire input image                          S1

        Detect inspection target region                 S2

   Adds luminance values of the pixels included in
 inspection target region to accumulated luminance image  S3

             Add 1 to count image for
       pixels included in inspection target region        S4

Yes   Is there an unacquired input image?                 S5
                                           No
        Calculate average image by dividing
      accumulated luminance image by count image          S6

           Perform shading correction of
           input image using average image                S7

                     Binarize                             S8

                      Label                               S9

              Calculate feature values                   S10

                 Classify defects                        S11

Yes   Is there an unprocessed input image?               S12
                                           No
                      End
```

**Description**

TECHNICAL FIELD

The present disclosure relates to a surface defect detection method and a surface defect detection device for detecting a surface defect in a strip-shaped body including a steel sheet or the like.

BACKGROUND

In recent years, the production process of steel products requires the detection of surface defects in either hot or cold steel material from the perspective of suppressing a large amount of defective products and improving yield. The steel materials referred to in the present disclosure include steel products, starting with steel sheets and shaped steel such as seamless steel pipes or tubes, welded steel pipes or tubes, hot-rolled steel sheets, cold-rolled steel sheets, and thick plates, as well as semi-finished products such as slabs created in the process of producing these steel products. As a surface inspection method for optically detecting surface defects in steel material, the technology described in Patent Literature (PTL) 1 through 3, for example, is conventionally known.

For example, PTL 1 discloses a surface defect detection method that detects surface defects in an inspection target region by irradiating illumination light from different directions on the same inspection target region of a steel material using two differentiable light sources, acquiring images based on reflected light from each illumination light, and performing differential processing between the acquired images.

The conventional technology for optically detecting surface defects in steel material is not limited to the technology described in PTL 1, and a widely implemented general technique is a method of illuminating a steel material surface to be inspected, capturing an image by detecting the reflected light with a camera having a two-dimensional or one-dimensional photo detector, and processing the obtained image to detect defects. A common method for detecting defects in an image is to recognize whether each pixel in the image is in a non-defective area or defective area by comparing the luminance of each pixel with a predetermined threshold.

The inspection of surface defects in steel material has the following two characteristics.

First, the entire steel material is scanned and is imaged repeatedly to inspect the entire steel material, since many steel material products are elongated. To achieve such scanning, a common configuration is to fix lighting equipment and cameras to a production line or the like and repeatedly capture images of the steel material being conveyed through the production line.

Next, the size of the steel material to be produced, such as the product width, varies. Consequently, the area in which steel material appears in the image captured by the fixed camera changes. Areas in the image where the steel material does not exist do not need to be inspected, and at the same time, it is necessary to suppress the detection of defects in such areas by mistake. Therefore, the range in the captured image where the steel material appears, i.e., the inspection target region, needs to be recognized dynamically, so that defects are detected only within the inspection target region.

Raw images captured by a camera often exhibit "shading" in which the luminance level varies depending on the position in the image due to factors such as uneven illumination, luminance falloff at the periphery of the camera's field of view caused by lens characteristics, and the like. Therefore, it has been difficult to recognize non-defective areas and defective areas with high accuracy by a method that simply compares the luminance values in the captured image with a threshold. For this reason, preprocessing known as shading correction is performed on the raw image to correct for uneven luminance, so that the luminance level in the non-defective areas is uniform.

More specifically, the correction is performed by using a waveform or image indicating a shading pattern and dividing the captured image by the shading pattern or subtracting the shading pattern from the captured image. Shading patterns can be broadly classified into fixed and dynamic patterns.

In the case of fixed patterns, shading correction is always performed using the same pattern. The pattern is, for example, determined experimentally in advance. For example, one method is to designate, as the shading pattern, an average image calculated from a plurality of images obtained by imaging defect-free steel material.

In the case of a dynamic pattern, on the other hand, shading correction is performed on the captured images while sequentially calculating or updating the shading pattern from one or more images captured during the inspection. Calculating or updating this pattern in accordance with changes in the shading of the captured images can also improve the uniformity after correction as compared to a fixed pattern.

One of the basic methods of shading correction using such a dynamic pattern is to use a smoothed image, yielded by applying moving average processing or low-pass filter processing to a captured one-dimensional or two-dimensional image, as a shading pattern to correct the original image. Another method is to obtain the shading pattern by approximating the captured image with a polynomial or the like. These improved methods are disclosed in PTL 2 and 3.

For example, PTL 2 discloses a shading correction method for a surface inspection device, wherein threshold signals are generated based on a first shading correction signal, stored in advance, derived from signals detected by scanning up to the previous scanning time. The signal values of positions with respect to defective areas included in the signal detected by scanning of the current scanning time are replaced by the first shading correction signal to obtain a corrected signal in real time, thereby normalizing the signal detected by scanning of the current scanning time.

For example, PTL 3 discloses a method that includes detecting a detection target image region by identifying the boundary between an inspection target and a non-inspection target from an image captured by a camera; extracting a shading component as an image of the same size as the image captured by the camera by applying a low-pass filter to the image captured by the camera; then, for the image area portion of the inspection target in the image, approximating the luminance change of each line by a curve or approximating the luminance change of the entire image area portion of the inspection target by a curved surface; reconstructing into an image of the same size with the values of the approximate curve or approximate curved surface as the luminance; and correcting shading by dividing the image captured by the camera by the reconstructed image or subtracting the reconstructed image from the image captured by the camera.

CITATION LIST

Patent Literature

PTL 1: JP 2016-224069 A
PTL 2: JP 2012-112729 A
PTL 3: JP 2004-226347 A

SUMMARY

(Technical Problem)

However, each of the conventional shading correction methods described above has its own problems.

For example, in the fixed-pattern correction method, it is difficult to correct adequately under conditions such that shading fluctuates greatly, making it difficult to improve detection accuracy.

For example, the method of determining the shading pattern by applying moving average processing or low-pass filter processing to the captured image has the problem of "recoil" around defective areas in the corrected image. For defects with a large area, the signal in the center of the defect is also weakened by the correction effect, resulting in the problem of a "hollowing out". Both problems cause changes in the size and area of the defects, which could worsen the classification accuracy at the stage of determining the type and the grade of harmfulness of the defects after detection.

In the method described in PTL 2, the current signal detected by scanning is corrected by the first shading correction signal, which is based on previous signals detected by scanning. Therefore, if the edge position of the target material appearing in the signal shifts due to meandering or a change in width of the material to be inspected, the current signal detected by scanning ends up being corrected by the first shading correction signal in an area where the edge position has changed, making normal shading correction near the edge difficult.

In the method described in PTL 3, an approximate polynomial is assumed in the process of generating the shading pattern by approximation using a curve or curved surface of the original image, but if this approximate polynomial is not appropriate, the shading of the original image and the shading pattern will diverge. This leads to a problem in that the luminance of the non-defective areas cannot be made uniform.

It is an aim of the present disclosure, conceived in light of the above problems, to provide a surface defect detection method and a surface defect detection device capable of detecting surface defects of a strip-shaped body more accurately. For example, the aim is to provide a surface defect detection method and a surface defect detection device that suppress "recoil" around defective areas or the "hollowing out" of a defect with a large area, and that perform shading correction appropriately near edges as well even when the edge positions appearing in the image change due to meandering or a change in width of the material to be inspected.

(Solution to Problem)

We provide

(1)
a surface defect detection method for optically detecting a surface defect in a strip-shaped body, the surface defect detection method comprising:

an image acquisition step of detecting reflected light from the strip-shaped body obtained by illuminating a surface of the strip-shaped body and imaging while relatively scanning the surface of the strip-shaped body to acquire a plurality of images including the surface of the strip-shaped body;

an average image calculation step of calculating an average image of the acquired plurality of images;

an image correction step of performing shading correction on each image in the acquired plurality of images using the average image to obtain corrected images; and

a defect detection step of detecting a surface defect in the strip-shaped body based on the corrected images, wherein

the average image calculation step includes recognizing an inspection target region in which the strip-shaped body is located in each image in the plurality of images and contributing to the average image only for pixels in the inspection target region.

(2) In the surface defect detection method according to (1),
the image correction step may include dividing each image in the acquired plurality of images by the average image.

(3) In the surface defect detection method according to (1),
the image correction step may include subtracting the average image from each image in the acquired plurality of images.

(4) In the surface defect detection method according to any one of (1) to (3),
the average image calculation step may include recognizing a non-stationary portion within the inspection target region in each image in the plurality of images and contributing to the average image only for pixels in a stationary portion.

(5) In the surface defect detection method according to any one of (1) to (4),
the strip-shaped body may include steel material.

We provide

(6) a surface defect detection device for optically detecting a surface defect in a strip-shaped body, the surface defect detection device comprising:

an illumination unit configured to illuminate a surface of the strip-shaped body;

an imager configured to detect reflected light from the strip-shaped body obtained by illuminating the surface of the strip-shaped body using the illumination unit; and

an image processor configured to scan the surface of the strip-shaped body relatively and capture images using the illumination unit and the imager, process a plurality of images including the surface of the strip-shaped body, and detect a surface defect of the strip-shaped body, wherein

the image processor is configured to

calculate an average image of the plurality of images,

acquire corrected images yielded by performing shading correction on each image in the plurality of images using the average image,

detect a surface defect in the strip-shaped body based on the corrected images, and

recognize an inspection target region in which the strip-shaped body is located in each image in the plurality of images and contribute to the average image only for pixels in the inspection target region.

(Advantageous Effect)

The surface defect detection method and surface defect detection device according to an embodiment of the present disclosure can detect surface defects of a strip-shaped body more accurately. For example, "recoil" around defective areas or a "hollowing out" of a defect with a large area is suppressed. In addition, shading correction can be performed appropriately near edges as well even when the edge positions appearing in the image change due to meandering or a change in width of the material to be inspected.

BRIEF DESCRIPTION OF THE DRAWINGS

In the accompanying drawings:

FIG. 1 is a schematic diagram illustrating a configuration of a surface defect detection device according to an embodiment of the present disclosure;

FIG. 2 is a flowchart illustrating the image processing executed by the image processor of FIG. 1;

FIG. 3 illustrates a plurality of images of the steel material in FIG. 1;

FIGS. 4A to 4E illustrate an Example of the present disclosure;

FIGS. 5A to 5E illustrate a Comparative Example based on conventional technology;

FIGS. 6A to 6E illustrate a Comparative Example based on other conventional technology;

FIG. 7A is a graph illustrating the corrected luminance waveform between a-a in the shading-corrected image in FIG. 4D;

FIG. 7B is a graph illustrating the corrected luminance waveform between i-i in the shading-corrected image in FIG. 5D; and

FIG. 7C is a graph illustrating the corrected luminance waveform between u-u in the shading-corrected image in FIG. 6D.

DETAILED DESCRIPTION

The configuration and operations of the surface defect detection device according to an embodiment of the present disclosure are mainly described below with reference to the accompanying drawings.

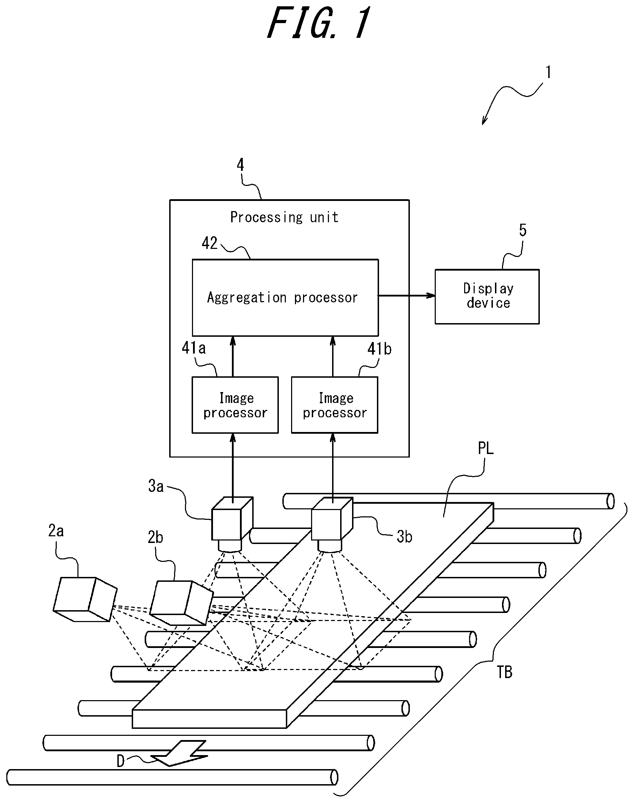

FIG. 1 is a schematic diagram illustrating a configuration of a surface defect detection device 1 according to an embodiment of the present disclosure. The surface defect detection device 1 optically detects surface defects in a strip-shaped body. In the present disclosure, the "strip-shaped body" includes, for example, steel material. The steel materials referred to in the present disclosure include steel products, starting with steel sheets and shaped steel such as seamless steel pipes or tubes, welded steel pipes or tubes, hot-rolled steel sheets, cold-rolled steel sheets, and thick plates, as well as semi-finished products such as slabs created in the process of producing these steel products.

As illustrated in FIG. 1, the surface defect detection device 1 according to an embodiment of the present disclosure detects surface defects in steel material PL as a strip-shaped body conveyed on a conveyor roller table TB in the direction of arrow D in the drawing. The surface defect detection device 1 has, as main components, illumination devices 2a, 2b, area sensors 3a, 3b, a processing unit 4, and a display device 5. The illumination devices 2a, 2b correspond to the "illumination units" recited in the claims. The area sensors 3a, 3b correspond to the "imagers" recited in the claims.

The illumination devices 2a, 2b include any light emitting elements that illuminate the surface of the strip-shaped body. For example, every time the steel material PL moves a certain distance on the conveyor roller table TB in the direction of the arrow D, the illumination devices 2a, 2b emit light to illuminate an inspection position on the steel material PL surface.

The area sensors 3a, 3b include any photo detector that detect reflected light from the strip-shaped body obtained by illuminating the surface of the strip-shaped body with the illumination devices 2a, 2b. The area sensors 3a, 3b include, for example, cameras. For example, the area sensors 3a, 3b detect reflected light from the inspection position on the steel material PL surface in synchronization with the light emission by the lighting devices 2a, 2b, respectively, and capture images of the steel material PL surface.

The surface defect detection device 1 is not limited to the embodiment illustrated in FIG. 1, which has two sets of illumination devices and area sensors. The surface defect detection device 1 may, for example, have one set or three or more sets of illumination devices and area sensors, depending on the product width of the steel material PL to be inspected. The surface defect detection device 1 may be arranged with a plurality of illumination devices for one area sensor or a plurality of area sensors for one illumination device.

The processing unit 4 has one or more processors. In the present embodiment, the "processor" can be a general-purpose processor or a dedicated processor specialized for particular processing, but the processor is not limited to these examples. The processing unit 4 acquires the two-dimensional images captured by the area sensors 3a, 3b and detects surface defects in the steel material PL. The processing unit 4 has therein image processors 41a, 41b and an aggregation processor 42.

The image processors 41a, 41b process a plurality of images including the surface of the strip-shaped body, obtained by scanning the surface of the strip-shaped body relatively and capturing images using the illumination devices 2a, 2b and the area sensors 3a, 3b, and detect a surface defect of the strip-shaped body. By executing a series of image processing steps described below, the image processors 41a, 41b detect the range over which the steel material PL appears in the field of view of each area sensor and detect surface defects on the steel material PL. The image processors 41a, 41b may determine the type and the grade of harmfulness of a defect based on the characteristics of each detected surface defect.

The aggregation processor 42 aggregates, over the entire steel material PL, the information on the range of the steel material PL and the information on surface defects detected by each of the image processors 41a and 41b. The aggregation processor 42 creates inspection results information, such as a defect map that illustrates where defects are located on the steel material PL, a summary table tallying the number of defects on the steel material PL by defect type and grade of harmfulness, and the like. The aggregation processor 42 outputs the created inspection results information to the display device 5 to present the information to the operator using the display device 5.

The display device 5 has one or more output interfaces that output information to present the information to the operator. For example, the display device 5 has a display that outputs information in the form of video.

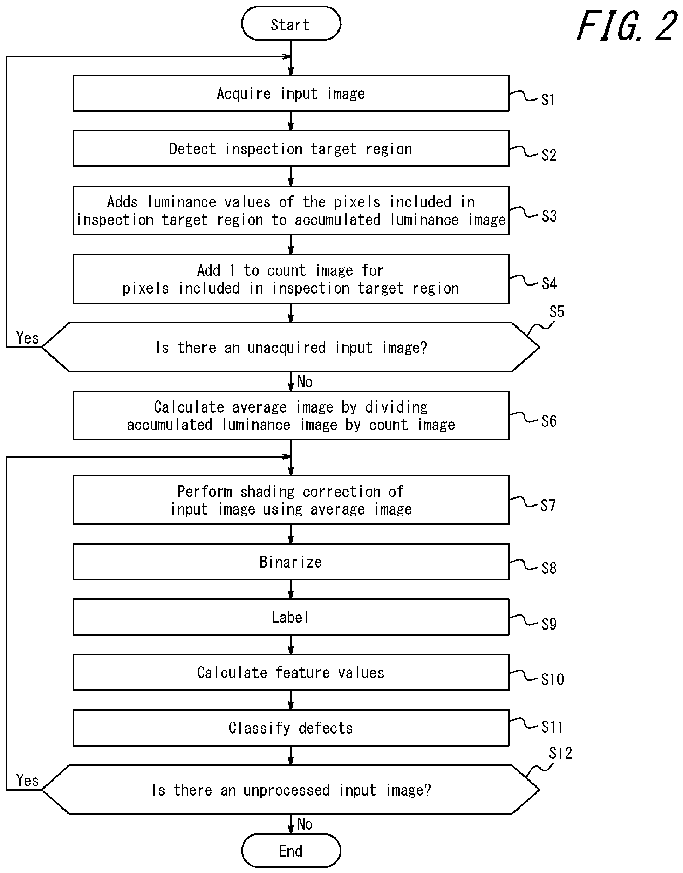

Next, the image processing executed by the image processors 41a, 41b is described with reference to FIG. 2.

FIG. 2 is a flowchart illustrating the image processing executed by the image processors 41a, 41b of FIG. 1. The procedures for the image processing executed by the image processors 41a, 41b are identical. Therefore, the image processing in the system formed by the illumination device 2a, the area sensor 3a, and the image processor 41a will be described below as an example.

In step S1, the image processor 41a acquires an input image $I_n(x, y)$ from the area sensor 3a. The input image $I_n(x, y)$ is an image captured by the area sensor 3a detecting the reflected light, from the steel material PL surface illuminated by the illumination device 2a, in synchronization with light emission by the illumination device 2a. Here, the subscript n indicates that this is the $n^{th}$ image captured since the start of the inspection of the steel material PL. The coordinates $(x, y)$ indicate the two-dimensional coordinates in the input image. The coordinate x is a coordinate corresponding to the width direction of the steel material PL, i.e., a direction orthogonal to the direction of the arrow D in FIG. 1. The coordinate y is a coordinate corresponding to the travel direction of the steel material PL, i.e., the direction of the arrow D in FIG. 1. The value of $I_n(x, y)$ represents the luminance at each coordinate $(x, y)$.

In step S2, the image processor 41a detects the inspection target region based on the input image $I_n(x, y)$ acquired in step S1, i.e., the area in which the steel material PL exists in the input image $I_n(x, y)$. It suffices to adopt a method appropriate for the material to be inspected and its background as the method of detecting the inspection target region.

For example, in a case in which the steel material PL in the input image $I_n(x, y)$ is sufficiently bright relative to the background, a method can be adopted to calculate a binary image $R_n(x, y)$ indicating the inspection target region at each coordinate $(x, y)$ by the Equations (1) and (2) below, using a threshold $T_R$ to distinguish whether a coordinate represents the background or the material to be inspected.

$$R_n(x, y) = 1 \text{ when } I_n(x, y) \geq T_R \text{ (inspection target region)} \qquad (1)$$

$$R_n(x, y) = 0 \text{ when } I_n(x, y) < T_R \text{ (background)} \qquad (2)$$

Another method that can be adopted is to perform a search in the x-direction at each y-coordinate of the input image $I_n(x, y)$ and detect the inspection target region by recognizing the position where $I_n(x, y)$ first exceeds $T_R$ by a predetermined number of consecutive pixels as the boundary between the steel material PL and the background.

In step S3, the image processor 41a adds the luminance values of the pixels included in the inspection target region of the input image $I_n(x, y)$, as detected in step S2, to an accumulated luminance image $S(x, y)$. The accumulated luminance image $S(x, y)$ contains the sum of the luminance values within the inspection target region in each of the input images $I_1(x, y)$ to $I_{n-1}(x, y)$. The image processor 41a updates the accumulated luminance image $S(x, y)$ as follows.

$$S(x, y) := S(x, y) + I_n(x, y) \times R_n(x, y) \qquad (3)$$

In step S4, the image processor 41a adds 1 to a count image $C(x, y)$ for the pixels included in the inspection target region in the input image $I_n(x, y)$, as detected in step S2. The count image $C(x, y)$ contains a sum of the number of times that a pixel at each coordinate $(x, y)$ has been within the inspection target region in the input images $I_1(x, y)$ to $I_{n-1}(x, y)$. The image processor 41a updates the count image $C(x, y)$ as follows.

$$C(x, y) := C(x, y) + R_n(x, y) \qquad (4)$$

The image processor 41a initializes the count image $C(x, y)$ for each steel material PL, which is the material to be inspected.

In step S5, the image processor 41a determines whether there is an unacquired input image. Upon determining that there is an unacquired input image, the image processor 41a returns to step S1 and performs steps S1 to S4 again for the next input image $I_{n+1}(x, y)$. Upon determining that there are no unacquired input images, the image processor 41a performs the next step S6.

In step S6, the image processor 41a calculates the average image $A(x, y)$ of the plurality of input images acquired in step S1. More specifically, the image processor 41a calculates the average image A(x, y) by dividing the accumulated luminance image S(x, y) by the count image C(x, y). The image processor 41a performs a calculation with the following equation at each coordinate (x, y).

$$A(x, y) := S(x, y)/C(x, y) \text{ when } C(x, y) \neq 0 \qquad (5)$$

(Note that the value of A(x, y) is arbitrary when C(x, y) = 0.)

The values of the average image A(x, y) calculated by Equation (5) are the average luminance at the positions where the steel material PL corresponds to the coordinates (x, y) of the input image in the field of view of the area sensor 3a. The average image as a whole represents a shading pattern caused by non-uniformity of the illumination device 2a or other factors. Here, in the average image calculation step of step S6, the image processor 41a recognizes the inspection target region in which the strip-shaped body is located in each image in the plurality of images and contributes to the average image A(x, y) only for pixels in the inspection target region. It should be noted that in each input image, the luminance of the input image contributes to the average value only when the coordinates (x, y) are within the inspection target region, and the contribution from the background is eliminated.

In step S7, the image processor 41a performs shading correction using the average image A(x, y) on each image in the plurality of input images acquired in step S1 to acquire a corrected image. More specifically, the image processor 41a performs shading correction on the input image $I_n(x, y)$ using the average image A(x, y) calculated in step S6.

In the image correction step of step S7, the image processor 41a divides each image in the plurality of images acquired in step S1 by the average image A(x, y). More specifically, if $J_n(x, y)$ is the image yielded by performing shading correction on the input image $I_n(x, y)$, the image processor 41a performs calculation with the following equation for division-type shading correction.

$$J_n(x, y) := I_n(x, y)/A(x, y) \qquad (6)$$

Alternatively, in the image correction step of step S7, the image processor 41a subtracts the average image A(x, y) from each image in the plurality of images acquired in step S1. More specifically, the image processor 41a performs calculation with the following equation for subtraction-type shading correction.

$$J_n(x, y) := I_n(x, y) - A(x, y) \qquad (7)$$

However, the above shading correction calculation is performed within the inspection target region in the input image $I_n(x, y)$, i.e., for coordinates (x, y) for which $R_n(x, y) = 1$. An arbitrary value is assigned for other coordinates corresponding to the background ($R_n(x, y) = 0$). This shading correction results in a constant average luminance level for the non-defective areas of the steel material PL, regardless of position. For example, in the division-type shading correction using Equation (6), the average luminance level of the non-defective areas is $J_n(x, y) = 1$. For example, in the subtraction-type shading correction using Equation (7), the average luminance level of the non-defective areas is $J_n(x, y) = 0$.

Here, as described above, in the average image A(x, y), the luminance of the input image contributes to the average value only when the coordinates (x, y) are within the inspection target region in each input image, and the contribution from the background is eliminated. Therefore, shading correction is properly performed even at coordinates that are either on the steel material PL surface or in the background in a series of input images $I_n(x, y)$ due to meandering or changing width of the steel material PL.

The image processor 41a may perform an appropriate linear transformation or the like if necessary to adjust the average luminance level in the shading-corrected image $J_n(x, y)$ or the contrast of a defect signal. For example, the image processor 41a transforms the image with division-type shading correction yielded by Equation (6) to a 256-level grayscale image by setting the average luminance level to 128. In such a case, the image processor 41a performs the transformation process with the following equation, taking the transformed shading-corrected image as Jn'(x, y).

$$J_n'(x, y) = J_n(x, y) \times 128 \qquad (8)$$

In step S8, the image processor 41a binarizes the shading-corrected image $J_n(x, y)$ obtained in step S7. Binarization is used to determine whether each pixel belongs to a defective area. Letting the binary image be $B_n(x, y)$, the image processor 41a uses the following equations to calculate the binary image $B_n(x, y)$ by a comparison with two thresholds $T_1$ and $T_2$ at each pixel of the shading-corrected image $J_n(x, y)$.

$$B_n(x, y) := 1 \text{ when } J_n(x, y) \leq T_1 \text{ or } J_n(x, y) \geq T_2 \qquad (9)$$

$$B_n(x, y) := 0 \text{ when } T_1 < J_n(x, y) < T_2 \qquad (10)$$

The threshold $T_1$ is smaller than the average luminance level. The threshold $T_2$ is greater than the average luminance level. In the case of division-type shading correction, $T_1 < 1 < T_2$. In the case of subtraction-type shading correction, $T_1 < 0 < T_2$. In the case of performing transformation as in Equation (8), the thresholds $T_1$ and $T_2$ are respectively the values below and above the average luminance level after the transformation. In a case in which the defect to be detected is either brighter or darker than the non-defective area on the image, the image processor 41a may be configured to make a comparison with only one of the thresholds $T_1$, $T_2$.

In step S9, the image processor 41a extracts blobs from the binary image $B_n(x, y)$ obtained in step S8 and performs labeling on the extracted blobs. Here, a blob is a region in which pixels with a value of 1, i.e., pixels that belong to a defective area, are continuous in the binary image $B_n(x, y)$. Labeling is the process of giving each blob an identifying label (serial number).

Regions with pixels belonging to the same defect in the binary image $B_n(x, y)$ may not be continuous and can be divided into two or more blobs. To address such a case, the image processor 41a may consider blobs to be one blob when the distance between the blobs is less than a predetermined distance and may assign the blobs the same label. The image processor 41a may remove blobs with a small area (number of pixels), because even in non-defective areas, small blobs may be generated by harmless texture on the steel material PL surface.

In step S10, the image processor 41a calculates feature values of the blobs, i.e., defects, labeled in step S9. The feature values are calculated for the pixel region belonging to each blob (defect) in the shading-corrected image $J_n(x, y)$ (or input image $I_n(x, y)$) and the binary image $B_n(x, y)$. Feature values include, for example, those that describe the size of the defect, such as width, length, and area; those related to the shape of the defect, such as aspect ratio and circularity; and those related to the brightness of the defect, such as average luminance and luminance histograms.

In step S11, the image processor 41a detects surface defects on the strip-shaped body based on the shading-corrected image $J_n(x, y)$. More specifically, the image processor 41a classifies a defect based on the feature values of each blob (defect) calculated in step S10. For example, the image processor 41a assigns each blob a defect type and grade of harmfulness. A predetermined IF-THEN rule may be applied as the method of classification, classifiers generated by various machine learning methods may be applied, or a combination of these methods may be applied.

In step S12, the image processor 41a determines whether there is an input image $I_n(x, y)$ for which the processes from steps S7 to S11 have not been completed. Upon determining that there is an input image for which the processes have not been completed, the image processor 41a returns to step S7 and repeats the processes from step S7 to step S11. Upon determining that the processes have been completed for all input images, the image processor 41a terminates processing.

By performing the above processes of steps S1 to S12, the surface defect detection device 1 can successfully perform shading correction near the sheet edges even when the steel material PL meanders and the edge positions fluctuate and can achieve shading correction that does not cause "recoil" around defective areas. This enables the surface defect detection device 1 to detect surface defects with high sensitivity and to classify the type and the grade of harmfulness of defects appropriately.

Non-stationary portions such as defective areas, i.e., portions with higher or lower luminance than the surrounding non-defective areas, within the above-described inspection target region contribute to the average image $A(x, y)$. For example, at coordinates $(x, y)$ where the value of the count image $C(x, y)$ is small, the degree of contribution is large, causing extra distortion in the average image $A(x, y)$, which is the estimation of the shading pattern. To suppress such distortion, the image processor 41a may calculate the next binary image $Q_n(x, y)$ in addition to $R_n(x, y)$ in step S2.

$$Q_n(x, y) = 1 \text{ when } R_n(x, y) = 1 \text{ and } (x, y) \text{ is a stationary portion} \qquad (11)$$

$$Q_n(x, y) = 0 \text{ when } R_n(x, y) = 0 \text{ or } (x, y) \text{ is a non-stationary portion} \qquad (12)$$

In step S3, the image processor 41a replaces Equation (3) with the following Equation (3') for calculation.

$$S(x, y) := S(x, y) + I_n(x, y) \times Q_n(x, y) \qquad (3')$$

In step S4, the image processor 41a replaces Equation (4) with the following Equation (4') for calculation.

$$C(x, y) := C(x, y) + Q_n(x, y) \qquad (4')$$

To determine whether a pixel is a stationary portion or non-stationary portion in Equations (11), (12), the image processor 41a may, for example, use a method that compares each pixel of the input image $I_n(x, y)$ with a predetermined threshold and extracts pixels with extremely high or low luminance. Alternatively, the image processor 41a may perform steps S1 through S8 once to calculate the shading-corrected image $J_n(x, y)$ and the binary image $B_n(x, y)$, and then determine that a pixel at $(x, y)$ for which $B_n(x, y) = 1$ is a non-stationary portion. The image processor 41a may then return to step S1 again, replace the equations in steps S3 and S4 with the above Equations (3'), (4'), and execute the processes up to step S12.

In this case, in the average image calculation step of step S6, the image processor 41a may recognize non-stationary portions within the inspection target region in each image in the plurality of input images and contribute to the average image $A(x, y)$ only for pixels in stationary portions.

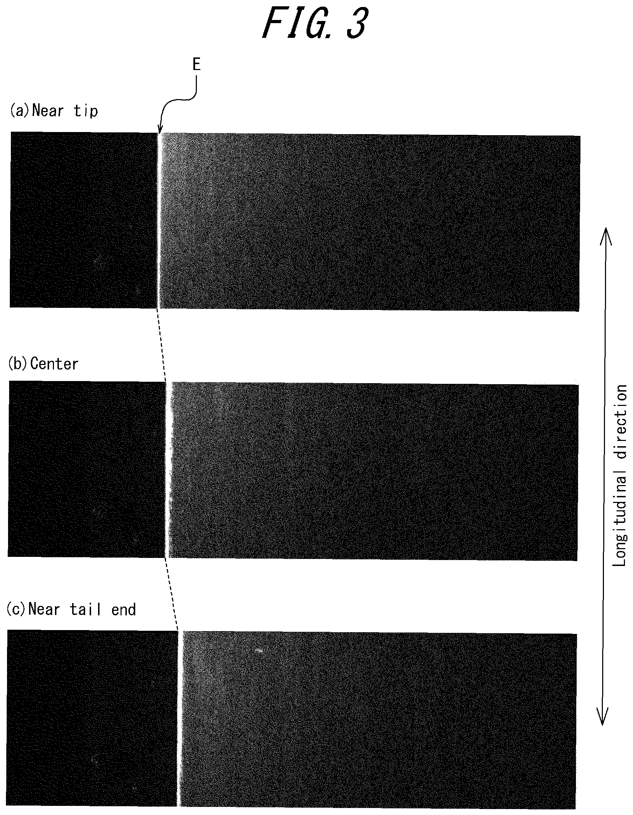

The following mainly describes Examples according to the present disclosure and Comparative Examples based on conventional technology, with reference to FIGS. 3 to 7C.

FIG. 3 illustrates a plurality of images of the steel material PL in FIG. 1. FIG. 3 illustrates a portion of 61 images obtained by repeatedly capturing images, from the edge E to the center portion of a thick steel plate as steel material PL being conveyed on the conveyor roller table TB, at regular intervals in the longitudinal direction of one thick steel plate using the camera as the imager and the flash light as the illumination unit fixed above the conveyor roller table TB. In the upper tier of FIG. 3, (a) illustrates an image near the longitudinal tip of the thick steel plate. In the middle tier of FIG. 3, (b) illustrates an image at the longitudinal center of the thick steel plate. In the lower tier of FIG. 3, (c) illustrates an image near the longitudinal tail end of the thick steel plate. As illustrated in these three images, the position of the edge E of the thick steel plate has moved within the camera's field of view and is meandering on the conveyor roller table TB.

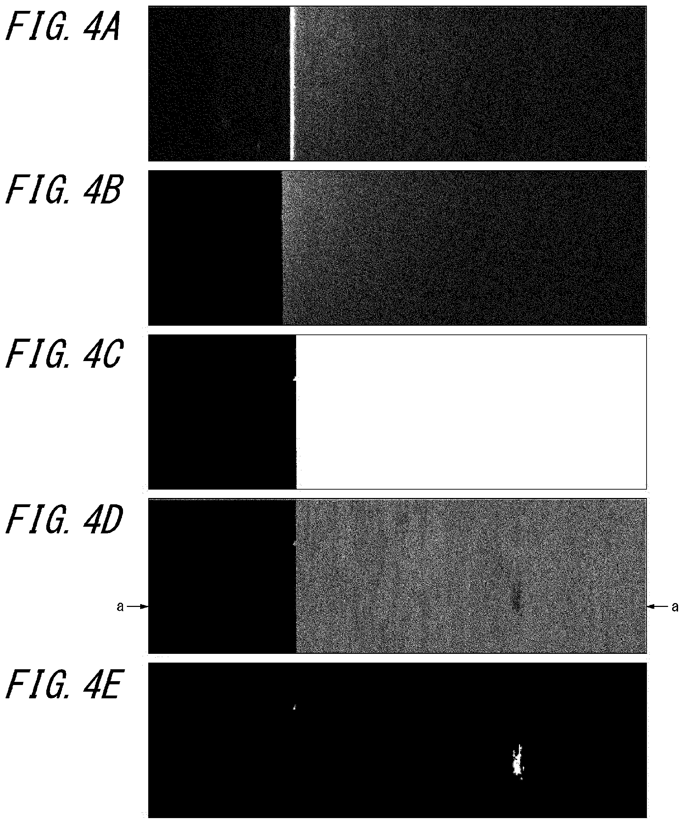

FIGS. 4A to 4E illustrate an Example of the present disclosure. FIGS. 4A to 4E illustrate an example of an input image with stain-like defects and processed images thereof, among images yielded by application of image processing by the surface defect detection device 1 according to an embodiment of the present disclosure to a series of images of the thick steel plate in FIG. 3.

FIG. 4A illustrates an input image $I_n(x, y)$. FIG. 4B illustrates an average image $A(x, y)$. The average image $A(x, y)$ in FIG. 4B corresponds to the shading pattern. FIG. 4C illustrates a binary image $R_n(x, y)$ illustrating the inspection target region. FIG. 4D illustrates a shading-corrected image $J_n(x, y)$. FIG. 4E illustrates a binary image $B_n(x, y)$ obtained by performing threshold processing on the shading-corrected image $J_n(x, y)$. The binary image $B_n(x, y)$ in FIG. 4E is the image in which defective areas are detected.

In FIGS. 4A to 4E, the image processor 41a searches for the edge of the thick steel plate from the left side of the input image in detecting the inspection target region in step S2 in FIG. 2 and designates the position at which 20 or more pixels to the right continuously exceed a predetermined luminance value as an edge position. Since halation occurs near the edge, the image processor 41a designated 18 pixels from the edge as a non-stationary portion to be excluded from the inspection target region. The image processor 41a removed blobs with an area less than 20 pixels as noise during the labeling process of step S9 in FIG. 2.

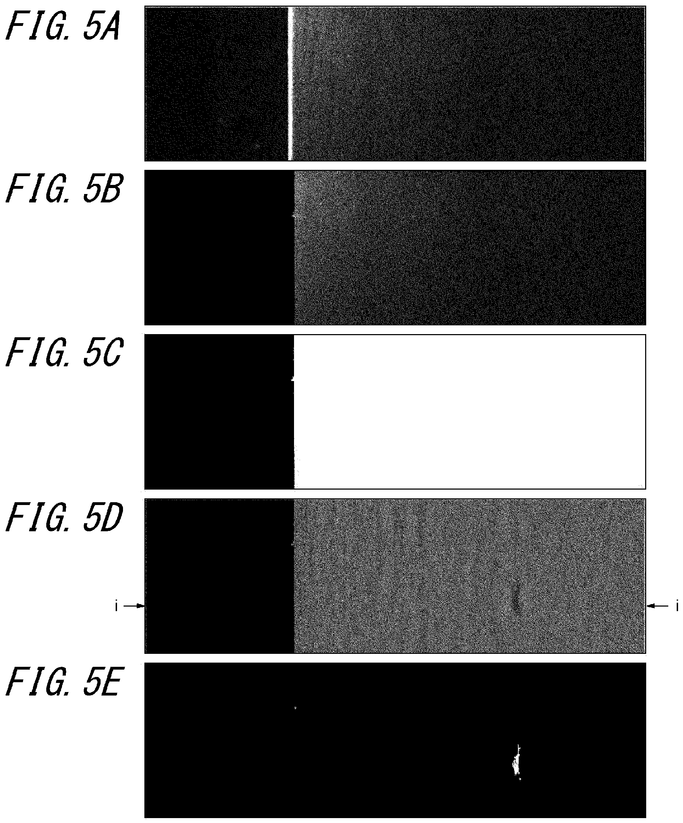

FIGS. 5A to 5E illustrate a Comparative Example based on conventional technology. FIGS. 5A to 5E illustrate the results of image processing in the case in which a shading pattern is calculated using a moving average filter and shading correction is performed on an input image identical to the image illustrated in FIG. 4A. The shading pattern was calculated for each y-coordinate and applied using a moving average filter of 64 pixels in the x-direction.

FIG. 5A illustrates the same input image as FIG. 4A. FIG. 5B illustrates the shading pattern generated by applying a moving average filter to the input image in FIG. 5A. FIG. 5C illustrates a binary image that is identical to FIG. 4C, which illustrates the inspection target region. FIG. 5D illustrates a shading-corrected image based on the shading pattern in FIG. 5B. FIG. 5E illustrates a binary image obtained by performing threshold processing on the shading-corrected image in FIG. 5D. The binary image in FIG. 5E is the image in which defective areas are detected. The same processes and parameters as in FIGS. 4A to 4E were used for all processes except shading correction.

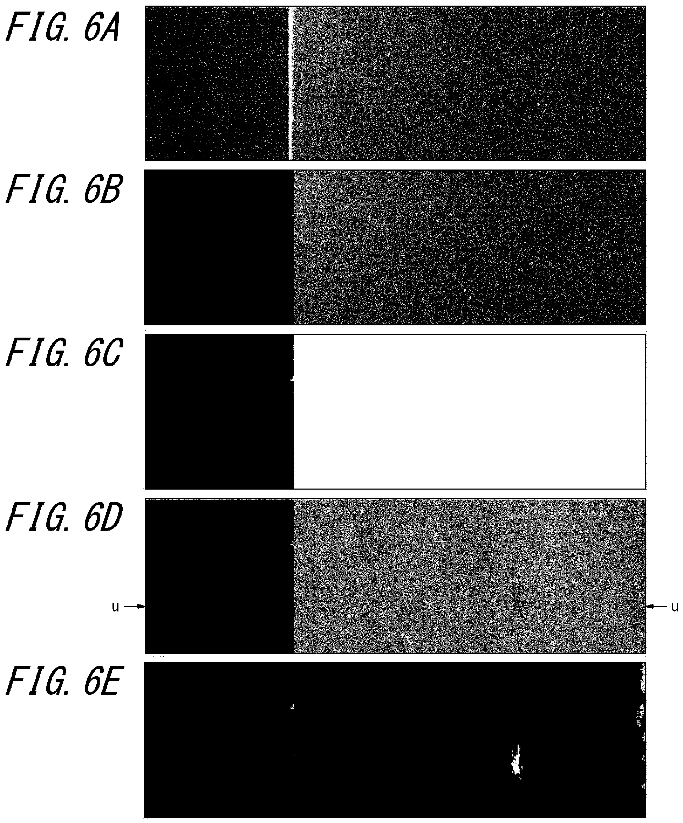

FIGS. 6A to 6E illustrate a Comparative Example based on other conventional technology. FIGS. 6A to 6E illustrate the results of image processing in the case in which a shading pattern is calculated using second-order polynomial approximation and shading correction is performed on an input image identical to the image illustrated in FIG. 4A.

FIG. 6A illustrates the same input image as FIG. 4A. FIG. 6B illustrates the shading pattern generated by applying second-order polynomial approximation to the luminance waveform in the x-direction for each y-coordinate of the input image in FIG. 6A. FIG. 6C illustrates a binary image that is identical to FIG. 4C, which illustrates the inspection target region. FIG. 6D illustrates a shading-corrected image based on the shading pattern in FIG. 6B. FIG. 6E illustrates a binary image obtained by performing threshold processing on the shading-corrected image in FIG. 6D. The binary image in FIG. 6E is the image in which defective areas are detected. The same processes and parameters as in FIGS. 4A to 4E were used for all processes except shading correction.

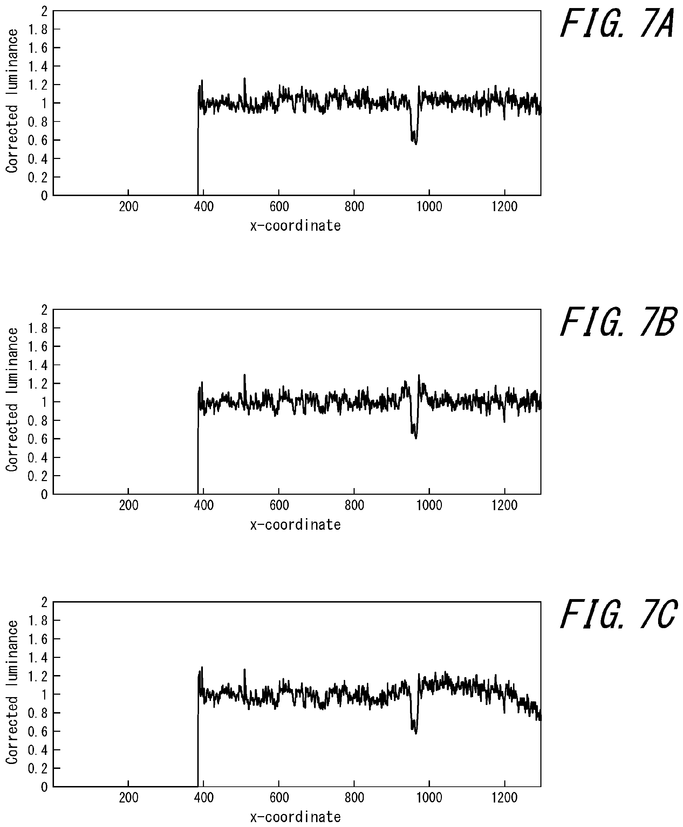

FIGS. 7A to 7C compare the results of shading correction between the Example based on the technology of the present disclosure and the two Comparative Examples. FIG. 7A is a graph illustrating the corrected luminance waveform between a-a in the shading-corrected image in FIG. 4D. FIG. 7B is a graph illustrating the corrected luminance waveform between i-i in the shading-corrected image in FIG. 5D. FIG. 7C is a graph illustrating the corrected luminance waveform between u-u in the shading-corrected image in FIG. 6D.

The average image $A(x, y)$ in FIG. 4B, which illustrates an Example of the present disclosure, represents the shading of the input image $I_n(x, y)$ in FIG. 4A well and is nearly unaffected by the texture and defects on the surface of the thick steel plate. In the shading-corrected image $J_n(x, y)$ in FIG. 4D, uniform luminance is achieved throughout as illustrated in the graph in FIG. 7A, and there is no "recoil" or the like around the defective area.

On the other hand, in the shading-corrected image in FIG. 5D, which is a Comparative Example according to conventional technology, a slightly brighter area on either side of the stain-like defective area (dark area), i.e., "recoil" relative to the defective area (dark area) occurs, as illustrated in the graph in FIG. 7B. In the Comparative Example illustrated in FIG. 5D, the "recoil" part does not cause false detection, but if the signal in the defective area were stronger, the signal level in the "recoil" part would also be proportionally larger, causing false detection to occur.

In the shading-corrected image in FIG. 6D, which is a Comparative Example according to other conventional technology, "recoil" does not occur as in FIG. 7B, yet the right side of the image is slightly darker, as illustrated in the graph in FIG. 7C. Shading correction is not adequate, indicating that the correction is insufficient. This results in a false detection on the right edge of the image in the binary image in FIG. 6E.

As described above, the technology of the present disclosure enables appropriate shading correction, even under conditions with meandering or variation in width of the material to be inspected, and suppresses phenomena such as "recoil" around defective areas, as compared to conventional technology.

The surface defect detection method and surface defect detection device 1 according to the above embodiment can detect surface defects of a strip-shaped body more accurately, since an average image calculated from a plurality of images is used as a shading pattern, and only pixels in the inspection target region in each of the plurality of images contribute to the average image. More specifically, "recoil" around defective areas or a "hollowing out" of a defect with a large area is suppressed in the corrected image. In addition, shading correction can be performed appropriately near edges as well even when the edge positions appearing in the image change due to meandering or a change in width of the material to be inspected.

While the present disclosure has been described with reference to the drawings and examples, it should be noted that various modifications and revisions may be implemented by those skilled in the art based on the present disclosure. Accordingly, such modifications and revisions are included within the scope of the present disclosure. For example, functions or the like included in each configuration, each step, or the like can be rearranged without logical inconsistency, and a plurality of configurations, steps, or the like can be combined into one or divided.

For example, the shape, size, arrangement, orientation, and number of each component described above are not limited to those illustrated in the above description and the drawings. The shape, size, arrangement, orientation, and number of each component may be configured in any way that can achieve the corresponding function.

For example, it is also possible to configure a general-purpose electronic device, such as a smartphone or computer, to function as the surface defect detection device 1 according to the above embodiment. Specifically, a program describing the processing details to realize each function of the surface defect detection device 1 according to the embodiment is stored in the memory of the electronic device, and the program is read and executed by the processor of the electronic device. An embodiment of the present disclosure can thus also be realized as a program executable by a processor.

Alternatively, the disclosed embodiment can also be realized as a non-transitory computer-readable medium storing a program executable by one or more processors to cause the surface defect detection device 1 or the like of the embodiment to perform each function. Such embodiments are also to be understood as included in the scope of the present disclosure.

In the above embodiments and examples, the "imager" is configured to use an area sensor, i.e., a camera or the like having image capturing elements arrayed in two dimensions, but this example is not limiting. A line sensor, i.e., a camera with imaging elements arranged in one dimension, may be used as the "imager". In the case of using a line sensor, imaging of the material to be inspected is performed one line at a time in the x-direction. Therefore, the surface defect detection device 1 may set the size of the input image $I_n(x, y)$ in the y-direction to 1, or may form an input image $I_n(x, y)$ every time a certain number of lines are accumulated.

The "strip-shaped body" is described in the above embodiment as including steel material, for example, but is not limited to this example. The strip-shaped body may include any strip-shaped or sheet-shaped object other than steel material.

REFERENCE SIGNS LIST

| | | |
|---|---|---|
| 1 | Surface defect detection device |
| 2a | Illumination device (illumination unit) |
| 2b | Illumination device (illumination unit) |
| 3a | Area sensor (imager) |
| 3b | Area sensor (imager) |
| 4 | Processing unit |
| 41a | Image processor |
| 41b | Image processor |
| 42 | Aggregation processor |
| 5 | Display device |
| E | Edge |
| PL | Steel material (strip-shaped body) |
| TB | Conveyor roller table |

**Claims**

1. A surface defect detection method for optically detecting a surface defect in a strip-shaped body, the surface defect detection method comprising:

   an image acquisition step of detecting reflected light from the strip-shaped body obtained by illuminating a surface of the strip-shaped body and imaging while relatively scanning the surface of the strip-shaped body to acquire a plurality of images including the surface of the strip-shaped body;
   an average image calculation step of calculating an average image of the acquired plurality of images;
   an image correction step of performing shading correction on each image in the acquired plurality of images using the average image to obtain corrected images; and
   a defect detection step of detecting a surface defect in the strip-shaped body based on the corrected images, wherein
   the average image calculation step includes recognizing an inspection target region in which the strip-shaped body is located in each image in the plurality of images and contributing to the average image only for pixels in the inspection target region.

2. The surface defect detection method according to claim 1, wherein
   the image correction step includes dividing each image in the acquired plurality of images by the average image.

3. The surface defect detection method according to claim 1, wherein
   the image correction step includes subtracting the average image from each image in the acquired plurality of images.

4. The surface defect detection method according to any one of claims 1 to 3, wherein
   the average image calculation step includes recognizing a non-stationary portion within the inspection target region in each image in the plurality of images and contributing to the average image only for pixels in a stationary portion.

5. The surface defect detection method according to any one of claims 1 to 3, wherein
   the strip-shaped body may include steel material.

6. A surface defect detection device for optically detecting a surface defect in a strip-shaped body, the surface defect detection device comprising:

   an illumination unit configured to illuminate a surface of the strip-shaped body;
   an imager configured to detect reflected light from the strip-shaped body obtained by illuminating the surface of the strip-shaped body using the illumination unit; and
   an image processor configured to scan the surface of the strip-shaped body relatively and capture images using the illumination unit and the imager, process a plurality of images including the surface of the strip-shaped body, and detect a surface defect of the strip-shaped body, wherein
   the image processor is configured to

calculate an average image of the plurality of images,
acquire corrected images yielded by performing shading correction on each image in the plurality of images using the average image,
detect a surface defect in the strip-shaped body based on the corrected images, and
recognize an inspection target region in which the strip-shaped body is located in each image in the plurality of images and contribute to the average image only for pixels in the inspection target region.

# FIG. 1

FIG. 2

Start

Acquire input image ⟶ S1

Detect inspection target region ⟶ S2

Adds luminance values of the pixels included in inspection target region to accumulated luminance image ⟶ S3

Add 1 to count image for pixels included in inspection target region ⟶ S4

Is there an unacquired input image? ⟶ S5
Yes

No

Calculate average image by dividing accumulated luminance image by count image ⟶ S6

Perform shading correction of input image using average image ⟶ S7

Binarize ⟶ S8

Label ⟶ S9

Calculate feature values ⟶ S10

Classify defects ⟶ S11

Is there an unprocessed input image? ⟶ S12
Yes

No

End

# FIG. 3

(a) Near tip

E

(b) Center

(c) Near tail end

Longitudinal direction

*FIG. 4A*

*FIG. 4B*

*FIG. 4C*

*FIG. 4D*

a →                                                                          ← a

*FIG. 4E*

*FIG. 5A*

*FIG. 5B*

*FIG. 5C*

*FIG. 5D*

i →                    ← i

*FIG. 5E*

*FIG. 6A*

*FIG. 6B*

*FIG. 6C*

*FIG. 6D*

u →                                                                    ← u

*FIG. 6E*

FIG. 7A

FIG. 7B

FIG. 7C

## INTERNATIONAL SEARCH REPORT

| International application No. |
|---|
| **PCT/JP2023/024078** |

| A. CLASSIFICATION OF SUBJECT MATTER |
|---|
| **G01N 21/892**(2006.01)i<br>FI: G01N21/892 B |
| According to International Patent Classification (IPC) or to both national classification and IPC |

| B. FIELDS SEARCHED |
|---|
| Minimum documentation searched (classification system followed by classification symbols) |
| G01N 21/00-G01N 21/01, G01N 21/17-G01N 21/61, G01N 21/84-G01N 21/958, G01B 11/00-G01B 11/30, H01L 21/64-H01L 21/66, G06T 7/00 |
| Documentation searched other than minimum documentation to the extent that such documents are included in the fields searched |
| Published examined utility model applications of Japan 1922-1996<br>Published unexamined utility model applications of Japan 1971-2023<br>Registered utility model specifications of Japan 1996-2023<br>Published registered utility model applications of Japan 1994-2023 |
| Electronic data base consulted during the international search (name of data base and, where practicable, search terms used) |
| JSTPlus/JMEDPlus/JST7580 (JDreamIII) |

| C. DOCUMENTS CONSIDERED TO BE RELEVANT |
|---|

| Category* | Citation of document, with indication, where appropriate, of the relevant passages | Relevant to claim No. |
|---|---|---|
| A | JP 2018-155690 A (JFE STEEL CORP) 04 October 2018 (2018-10-04)<br>paragraphs [0026]-[0041] | 1-6 |
| A | JP 2016-156671 A (JFE STEEL CORP) 01 September 2016 (2016-09-01)<br>paragraphs [0034]-[0044] | 1-6 |
| A | WO 2021/149588 A1 (JFE STEEL CORP) 29 July 2021 (2021-07-29)<br>paragraphs [0052]-[0058] | 1-6 |
| A | US 2018/0374220 A1 (KYUNGPOOK NATIONAL UNIVERSITY INDUSTRY-ACADEMIC COOPERATION FOUNDATION) 27 December 2018 (2018-12-27)<br>paragraph [0046], fig. 4 | 1-6 |
| A | JP 2008-102818 A (SEIKO EPSON CORP) 01 May 2008 (2008-05-01)<br>paragraphs [0003], [0026] | 1-6 |
| A | JP 2004-226347 A (NIPPON STEEL CORP) 12 August 2004 (2004-08-12)<br>paragraphs [0002]-[0003] | 1-6 |

☑ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **21 July 2023** | **01 August 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

| International application No. |
| --- |
| **PCT/JP2023/024078** |

### C. DOCUMENTS CONSIDERED TO BE RELEVANT

| Category* | Citation of document, with indication, where appropriate, of the relevant passages | Relevant to claim No. |
| --- | --- | --- |
| A | JP 2017-219343 A (SUMITOMO CHEMICAL CO) 14 December 2017 (2017-12-14) paragraph [0033] | 1-6 |

Form PCT/ISA/210 (second sheet) (January 2015)

## INTERNATIONAL SEARCH REPORT
### Information on patent family members

International application No.

**PCT/JP2023/024078**

| Patent document cited in search report | | | Publication date (day/month/year) | Patent family member(s) | Publication date (day/month/year) |
|---|---|---|---|---|---|
| JP | 2018-155690 | A | 04 October 2018 | US 2020/0025690 A1 paragraphs [0039]-[0057] | |
| JP | 2016-156671 | A | 01 September 2016 | (Family: none) | |
| WO | 2021/149588 | A1 | 29 July 2021 | EP 4095518 A1 paragraphs [0044]-[0051] | |
| US | 2018/0374220 | A1 | 27 December 2018 | (Family: none) | |
| JP | 2008-102818 | A | 01 May 2008 | (Family: none) | |
| JP | 2004-226347 | A | 12 August 2004 | (Family: none) | |
| JP | 2017-219343 | A | 14 December 2017 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016224069 A
- JP 2012112729 A
- JP 2004226347 A